# EUROPÄISCHE PATENTSCHRIFT

(11) **EP 2 414 150 B1**
(45) Veröffentlichungstag und Bekanntmachung des Hinweises auf die Patenterteilung: **21.02.2018**
(21) Anmeldenummer: 10710337.6
(22) Anmeldetag: 25.03.2010
(51) Int. Cl.: B29C 65/40, B29C 47/38, B05B 1/26

(54) **HANDSCHWEISSEXTRUDER MIT HEFTDÜSE**
HAND WELDING EXTRUDER COMPRISING A TACKING NOZZLE
EXTRUDEUSE DE SOUDAGE À LA MAIN COMPORTANT UNE BUSE DE POINTAGE

(30) Priorität: 01.04.2009 DE 102009015253
(43) Veröffentlichungstag der Anmeldung: 08.02.2012
(73) Patentinhaber: Dohle Extrusionstechnik GmbH, 53809 Ruppichteroth (DE)
(72) Erfinder: DOHLE, Peter Christian, 53809 Ruppichteroth (DE)
(74) Vertreter: Fritz, Edmund Lothar
(86) Internationale Anmeldenummer: PCT/EP2010/053937
(87) Internationale Veröffentlichungsnummer: WO 2010/112403

(56) Entgegenhaltungen:
- EP-A1- 0 594 889
- EP-A1- 1 634 688
- EP-A1- 1 637 234
- DE-B- 1 143 996
- DE-B- 1 296 358
- GB-A- 1 115 696
- US-A1- 2003 041 956

## Beschreibung

Die vorliegende Erfindung betrifft einen Handschweißextruder umfassend eine Extrudereinheit mit Extruderschnecke, eine Antriebseinheit mit Motor und Getriebe für den Antrieb der Extruderschnecke, eine Heißlufteinheit mit Heißluftdüse, ein äußeres Gehäuse sowie wenigstens einen Handgriff oder eine Griffvorrichtung, um den Handschweißextruder mit einer Hand oder mit beiden Händen zu halten, wobei Heißlufteinheit mit Heißluftdüse und Extrudereinheit mit Extruderschnecke andererseits in einem vorderen Geräteabschnitt jeweils in voneinander getrennten Gehäusen, nämlich Exgtrudergehäuse bzw. Heißluftgehäuse untergebracht sind, deren jeweilige Gehäuseachsen zueinander parallel oder in einem flachen Winkel verlaufen, wobei Extrudergehäuse und Heißluftgehäuse des vorderen Gehäuseabschnitts über einen Übergangsabschnitt miteinander verbunden sind und in einen gemeinsamen in Achsrichtung dahinter liegenden etwa zylindrischen Gehäuseabschnitt münden, der den Haltegriff für die Einhandbedienung umfasst und wobei sich am vorderen Ende des Extrudergehäuses ein Schweißschuh befindet.
Für das Kunststoffschweißen werden heute üblicherweise Handschweißextruder verwendet, bei denen über einen Drahteinzug das Schweißmaterial einer Extruderschnecke zugeführt und von dieser granuliert wird. Die Extruderschnecke drückt das Granulat in die Schmelzkammer, wo es aufgeschmolzen wird und aus der Extruderdüse austritt. Die Fügeteile werden mittels einer an dem Handschweißextruder angebrachten Heißluftdüse auf die Schweißtemperatur erwärmt. Zur schweißnahtbildenden Ausbringung des Schmelzguts auf die zu verschweißenden Fügeteile wird ein Schweißschuh verwendet, der auf dem vorderen Endbereich des Düsenrohrs der Extruderdüse befestigbar ist. Für unterschiedliche Anwendungszwecke werden je nach Form der herzustellenden Schweißnaht entsprechend geformte Schweißschuhe eingesetzt. Es ist aus dem Stand der Technik bekannt, Schweißschuhe zu verwenden, die teilweise aus Kunststoffen wie PTFE (Teflon) bestehen, wie dies beispielsweise in der DE 10 2005 044 465 A1 beschrieben ist.

Bekannte Handschweißextruder sind entweder als so genannte Zwei-Hand-Geräte ausgeführt und ähneln im Design einer Handbohrmaschine. Sie werden mit der einen Hand am Schaft gehalten und mit der zweiten Hand im vorderen Bereich. Es kann auch die Verbindung einer Extrudereinrichtung mit einem Bohrmaschinenantrieb vorgesehen sein. Einen Handschweißextruder der vorgenannten Art beschreibt beispielsweise die DE 10 2004 038 967 B3. Diese Geräte können einen größeren Ausstoß von beispielsweise 1,1 kg, 1,8 kg oder bis zu 3 kg Extrudat aufweisen. Sie weisen jedoch ein entsprechend höheres Gewicht auf und müssen mit beiden Händen gehalten werden.

Man hat daher in jüngerer Zeit versucht, kleinere Handschweißextruder zu entwickeln, die zwar einen geringeren Ausstoß haben, dafür aber eine kompaktere Bauweise und ein geringeres Gewicht aufweisen und sich mit nur einer Hand halten lassen. Bei einem solchen aus der DE 20 2007 007 282 U1 bekannten Handschweißextruder weist die Schweißeinheit ein stabförmiges Gehäuse auf mit einem vorderen Schweißabschnitt und einem hinteren Haltegriff. In dem vorderen Schweißabschnitt ist zum einen eine Plastifizierschneckeneinheit mit der Extruderschnecke und einer Wendelheizung angeordnet, die den eingezogenen Kunststoffdraht plastifiziert. Außerdem ist in diesem vorderen Schweißabschnitt auch die Heißlufterzeugungseinrichtung untergebracht, in die zunächst Kaltluft eintritt, die dann über ein Heizelement erhitzt wird und an einer Vorwärmdüse austritt, die sich unmittelbar neben dem Schweißschuh befindet, an deren Austrittsdüse der plastifizierte Kunststoff ausgepresst wird.

Aus der älteren nicht vorveröffentlichten Anmeldung 10 2009 004 307.1 der Anmelderin vom 10. 01. 2009 ist ein weiterer Handschweißextruder in kompakter Bauweise bekannt geworden, der sich in einem zylindrischen Abschnitt des Gehäuses im Prinzip mit nur einer Hand halten und bedienen lässt. Heißlufteinheit mit Heißluftdüse einerseits und Extrudereinheit mit Extruderschnecke andererseits sind hier in einem vorderen Geräteabschnitt jeweils in voneinander getrennten Gehäusen (Extrudergehäuse, Heißluftgehäuse) untergebracht, deren jeweilige Gehäuseachsen zueinander parallel oder in einem flachen Winkel verlaufen, wobei Extrudergehäuse und Heißluftgehäuse des vorderen Geräteabschnitts über einen Übergangsabschnitt miteinander verbunden sind und in einen gemeinsamen in Achsrichtung dahinter liegenden etwa zylindrischen Gehäuseabschnitt münden, der den Haltegriff für die Einhandbedienung umfasst.

Aus dem Stand der Technik ebenfalls bekannt ist die Technik des Warmgasschweißens oder Heißluftschweißens zur Verbindung von Bauteilen aus thermoplastischen Kunststoffen. Bei dieser Technik werden die zu verschweißenden Flächen mit einem Schweißstab und Warmluft auf Schmelztemperatur erwärmt und unter Druck verschweißt.

Bei den meisten Verfahren zum Verbinden von Bauteilen aus Kunststoff durch Extrusionsschweißen ist es notwendig, vor dem Verschweißen die zu verbindenden Bauteile zunächst an mehreren Stellen durch Heften gegenseitig zu fixieren. Dazu verwendet man Warmgasschweißgeräte mit einer sogenannten Heftdüse. Ein solches Gerät ist beispielsweise in der Deutschen Auslegeschrift DE 1 143 996 beschrieben. Beim Heften tritt ein schmaler Heißluftstrahl aus der Unterseite der Düse, deren nachfolgende Spitze dann das plastifizierte Material der zusammenzufügenden Werkstücke durch leichten Druck miteinander verbindet. Bei dieser bekannten Heißluftschweißvorrichtung wird vorgeschlagen, am vorderen Ende der Düse eine Heftdüse schwenkbar anzuordnen, so dass die Heißluft durch einen Schlitz der Heftdüse auf den thermoplastischen Kunststoff austritt.

Ein Handschweißextruder herkömmlicher Bauart ist beispielsweise aus der EP 0 594 889 A1 bekannt. Hier handelt es sich allerdings um ein Gerät, welches ein eigenes Gebläse aufweist, so dass die Luft im Gerät erzeugt werden kann und nicht von außen über einen Druckluftschlauch zugeführt werden muss. Das Gerät hat einen Lufterhitzer, der Luft erwärmt, von wo aus sie dann über eine Leitung einer Luftdüse zugeführt wird. Diese ist jedoch nach ihrer Bauart eine konventionelle Luftdüse, die nur der Vorwärmung von zu verschweißenden Platten dient, mittels derer jedoch nicht geheftet werden kann.

In der DE 31 31 695 A1 ist ein Handschweißextruder herkömmlicher Bauart beschrieben, bei dem die Heißluft von dem Lufterhitzer über einen flexiblen Schlauch zur Vorwärmdüse gelangt, um dann in der Nähe des Schweißschuhs auf das zu schweißende Material geblasen zu werden. Durch den flexiblen Schlauch ergibt sich ein gewisser Freiheitsgrad für Bewegungen an der Vorwärmdüse. Hier handelt es sich jedoch um eine einfache rohrförmige Heißluftdüse zur Vorwärmung, mittels derer die Heißluft ausgeblasen wird und nicht um eine Heftdüse im Sinne der vorliegenden Erfindung.

Aus der US 5,358,397 A1 ist eine Maschine bekannt, die einerseits einen Extruder umfasst und daneben auch eine Heißluftvorrichtung mit einem Gebläse, einer elektrischen Heizvorrichtung und einer Heißluftdüse, über die die Heißluft in Nähe des Extruderkopfs austritt. Die Heißlufteinheit befindet sich bei dieser Maschine an einem schwenkbaren Roboterarm, so dass die Heißlufteinheit insgesamt in verschiedene Positionen gebracht werden kann. Hier handelt es sich jedoch um eine größere stationäre Maschine mit komplexerem Aufbau, bei der die beweglichen Elemente über eine Hydraulik betätigt werden. Diese bekannte Maschine kommt an einer Produktionslinie einer industriellen Fließbandproduktion zum Einsatz und ist mit einem von einer Person mit einer oder zwei Händen bedienbaren tragbaren Handschweißextruder überhaupt nicht vergleichbar. Ein solcher Handschweißextruder sollte ein maximales Eigengewicht nicht überschreiten, da er sich sonst von der Bedienungsperson nicht mehr bequem handhaben lässt. Zudem handelt es sich auch bei der Heißluftdüse an dieser Maschine um eine herkömmliche Düse zur Vorwärmung eines Substrats, auf das mittels der Maschine über den Extruder beispielsweise ein schmelzflüssiges Material zur Herstellung einer Dichtungsnaht aufgebracht wird und nicht um eine Heftdüse im Sinne der vorliegenden Erfindung.

Aus der EP 1 637 234 A1 ist ein Handschweißextruder mit den Merkmalen der eingangs genannten Gattung bekannt. Bei diesem Handschweißextruder ist keine Heftdüse vorgesehen, so dass man für den Heftvorgang ein zusätzliches Warmgasschweißgerät benötigt. Die Warmluftleitung, an deren vorderem Ende sich die Vorwärmdüse befindet, ist bei diesem bekannten Handschweißextruder gekrümmt ausgebildet.

Die US 2003/041956 A1 beschreibt zum einen Vorrichtungen zum Heißgasschweißen von thermoplastischem Material unter Verwendung von Schweißdraht sowie auch Handschweißextruder umfassend eine Extrudereinheit mit Extruderschnecke, eine Antriebseinheit mit Motor und Getriebe für den Antrieb der Extruderschnecke, eine Heißlufteinheit mit Heißluftdüse, ein äußeres Gehäuse sowie wenigstens einen Handgriff oder eine Griffvorrichtung, um den Handschweißextruder mit einer Hand oder mit beiden Händen zu halten.

Aus der DE 12 96 358 B ist eine Heftdüse als Zusatzgerät für eine Gleitschweißdüse zum Warmgasschweißen thermoplastischer Kunststoff mit Zusatzdraht bekannt, bei der an der Heftdüse zu deren lösbarer Befestigung an der Gleitschweißdüse eine federnde Halterung angeordnet ist.

Beim Extrusionsschweißen mit den zuvor genannten Handschweißextrudern ist es nach wie vor in der Praxis so, dass man für den Vorgang des Heftens zunächst eine Vorrichtung zum Warmgasschweißen mit Heftdüse verwendet und für das anschließende Verschweißen dann einen Handschweißextruder einsetzt. Es ist somit bei vielen Anwendungen nach wie vor notwendig, an der Baustelle zwei Geräte vorzuhalten, die im Wechsel miteinander eingesetzt werden. Mit der einen Vorrichtung wird erst geheftet und mit dem Handschweißextruder wird dann geschweißt.

Hier setzt die vorliegende Erfindung ein. Die Aufgabe der vorliegenden Erfindung besteht darin, einen Handschweißextruder der eingangs genannten Gattung zur Verfügung zu stellen, mittels dessen sowohl ein Heften als auch ein Extrusionsschweißen durchgeführt werden kann.

Die Lösung dieser Aufgabe liefert ein Handschweißextruder der eingangs genannten Gattung mit den kennzeichnenden Merkmalen des Hauptanspruchs. Erfindungsgemäß ist vorgesehen, dass an dem Handschweißextruder im Bereich der Heißlufteinheit für die Vorwärmung beim Extrudatschweißen eine Heftdüse schwenkbar angebracht ist, wobei die Heftdüse an einem Rohrabschnitt der Heißluftdüse aus einer Arbeitsposition in eine Ruheposition schwenkbar angebracht ist und wobei die Spitze der Heftdüse in der Arbeitsposition vor den vorderen Austrittsbereich des Schweißschuhs ragt.

Dadurch ergibt sich nunmehr die Möglichkeit, den Handschweißextruder sowohl für das Heften der zu verbindenden Werkstücke als auch zum Extrudatschweißen zu verwenden, so dass nur noch ein Gerät für beide Arbeitsgänge notwendig ist. Zum Heften wird die Heftdüse in ihre Arbeitsposition gebracht, in der sie durch die Heißluft aus dem Heißluftgehäuse beaufschlagt wird. Wenn dann das Gerät zum Extrudatschweißen verwendet werden soll, wird die Heftdüse entweder in eine Ruheposition geschwenkt oder geklappt, oder die Heftdüse wird, wenn sie aufsteckbar oder aufschiebbar ist, einfach vom Gerät abgenommen.

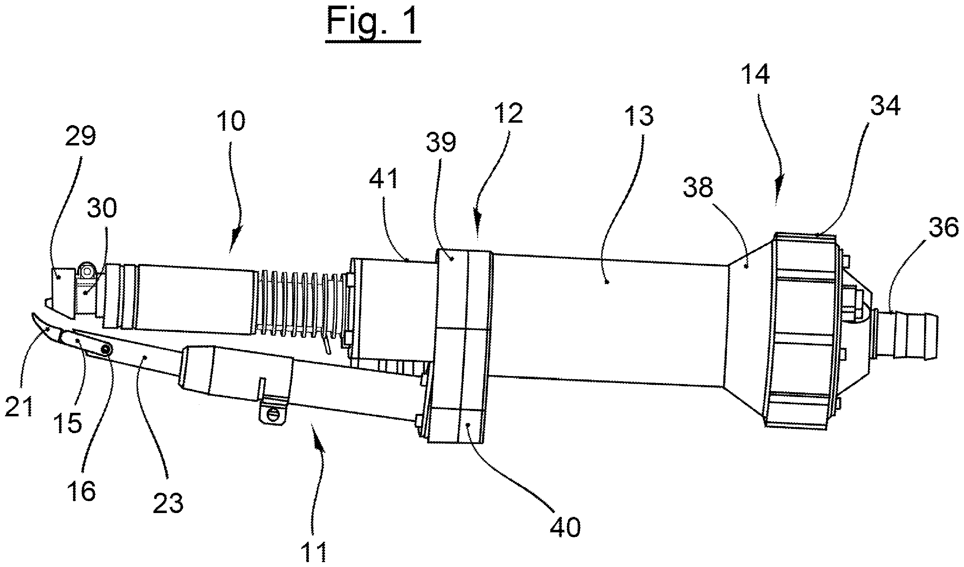

Unter einer Heftdüse im Sinne der vorliegenden Erfindung wird eine Düse verstanden, aus der einerseits ein Heißluftstrahl austreten kann und die außerdem eine Fläche aufweist, die von dem Heißluftstrahl erwärmt wird und die man an ein zu fixierendes Bauteil andrücken kann. Dies bedeutet, dass die Heftdüse es ermöglicht, einen ausreichenden Druck auf ein zu fixierendes Material auszuüben, welches durch die Heißluft plastifiziert wird. Eine einfache rohrförmige Heißluftdüse konventioneller Art ist für einen solchen Heftvorgang nicht geeignet, da dieser das Druckwiderlager fehlt. Das Rohr bildet zum einen keine ausreichende Auflagefläche (es endet lediglich in einer dünnwandigen Stirnfläche) und es würde sich insbesondere im erwärmten Zustand bei Ausübung von Druck verbiegen, wodurch sich die Düsenöffnung verformen würde. Die notwendige Druckfläche der Heftdüse für den Heftvorgang kann beispielsweise eine leicht gekrümmte Fläche sein, wobei sich diese insbesondere im Bereich des vorderen Endes der Heftdüse befindet, welche zu einer Art Spitze ausläuft. Dies ermöglicht es, die Heftdüse aufzusetzen und in einer leichten Schwenkbewegung in einem begrenzten Flächenbereich (Heftbereich) Druck auf den zu fixierenden Gegenstand auszuüben und so beispielsweise zwei miteinander zu verbindende plattenförmige Elemente aus Kunststoff gegeneinander zu drücken und damit zu heften. Diese Fläche an der Spitze der Heftdüse, die an den zu fixierenden Gegenstand angedrückt wird, befindet sich bevorzugt in Nähe des Luftkanals, durch den die Heißluft aus der Heftdüse austritt. Weiterhin wird bezüglich der Ausbildung der Heftdüse auf deren Darstellung in den Figuren 1, 4 und 5 der vorliegenden Anmeldung verwiesen.

Gemäß einer bevorzugten Aufgabenlösung kann man beispielsweise eine Baueinheit mit einer am einen Ende angebrachten Heftdüse vorsehen, die mit einem am anderen Ende vorgesehenen Stutzen auf einen etwa zylindrischen Abschnitt des Heißluftgehäuses aufsetzbar, aufschiebbar oder in diesen hinein schiebbar und mit dem Heißluftgehäuse verbindbar ist, wobei bei am Handschweißextruder angebrachter Baueinheit die Heftdüse in Nähe des Schweißschuhs endet. Wird die Heftdüse nicht mehr gebraucht, schwenkt oder klappt man diese aus dem Bereich des Schweißschuhs und die Heißluftdüse liegt dann frei, so dass man ganz normal mit dem Handschweißextruder mittels aus dem Schweißschuh austretenden Extrudats arbeiten kann. Oder aber die Heftdüse wird von der Heißlufteinheit abgezogen und bei Bedarf erneut aufgesteckt.

Da die Spitze der Heftdüse in der Arbeitsposition bevorzugt vor den vorderen Austrittsbereich des Schweißschuhs ragt, ist der Schweißschuh beim Heften mit dem Gerät nicht hinderlich. Da bevorzugt die Heftdüse an einem Rohrabschnitt der Heißluftdüse um eine quer zur Achse der Heißluftdüse verlaufende Achse schwenkbar angebracht ist, liegt bei in die Ruheposition geschwenkter Heftdüse das vordere Ende der Heißluftdüse frei und die Heißluftdüse kann wie bei einem herkömmlichen Handschweißextruder zum Vorwärmen der Schweißbereiche dienen.

Vorzugsweise ist weiterhin vorgesehen, dass die Heftdüse einen inneren Luftkanal aufweist, der bei in die Arbeitsposition geschwenkter Heftdüse vor dem vorderen Ende der Heißluftdüse endet und etwa mit diesem vorderen Ende der Heißluftdüse fluchtet. Dadurch kann in der Arbeitsposition der Heftdüse die Heißluft in diesen inneren Luftkanal eintreten und die Heftdüse und den zu heftenden Bereich der Werkstücke erwärmen.

Es kann auch beispielsweise so sein, dass bei in die Arbeitsposition geschwenkter Heftdüse sowohl Heißluft aus der Heißluftdüse unmittelbar (neben der Heftdüse) und auch durch den Luftkanal der Heftdüse hindurch in Richtung der zu verschweißenden Werkstücke austritt.

Gemäß einer besonders bevorzugten konstruktiven Ausgestaltung ist vorgesehen, dass eine lösbar am Heißluftgehäuse des Handschweißextruders anbringbare Baueinheit umfasst:
einen am Heißluftgehäuse anbringbaren Stutzen,
eine Heißluftdüse in axialer Verlängerung zu dem Stutzen,
eine an der Heißluftdüse schwenkbar anbringbare Heftdüse
oder eine an der Heißluftdüse aufsteckbar anbringbare Heftdüse.

Die erfindungsgemäße Ausstattung eines Handschweißextruders mit zusätzlicher Heftdüse kommt grundsätzlich für alle Handschweißextruder in Betracht. Wegen der Platzverhältnisse ist die erfindungsgemäße Lösung besonders geeignet für ein Gerät, bei dem zwei getrennte Gehäuseeinheiten für Extruder einerseits und Heißlufteinrichtung andererseits vorgesehen sind. Insbesondere kommen Handschweißextruder in Betracht, bei denen Heißlufteinheit mit Heißluftdüse einerseits und Extrudereinheit mit Extruderschnecke andererseits in einem vorderen Geräteabschnitt jeweils in voneinander getrennten Gehäusen (Extrudergehäuse, Heißluftgehäuse) untergebracht sind, deren jeweilige Gehäuseachsen zueinander parallel oder in einem flachen Winkel verlaufen, wobei Extrudergehäuse und Heißluftgehäuse des vorderen Geräteabschnitts über einen Übergangsabschnitt miteinander verbunden sind und in einen gemeinsamen in Achsrichtung dahinter liegenden etwa zylindrischen Gehäuseabschnitt münden, der den Haltegriff für eine Einhandbedienung umfasst.

Durch die Trennung von Heißluftgehäuse und Extrudergehäuse kann eine effektive thermische Trennung beider Systeme gewährleistet werden. Dies ist in der Praxis für eine exakte Temperaturführung sehr wichtig, da bereits geringe Abweichungen von der Solltemperatur des aufgeschmolzenen Extrudats im Bereich von beispielsweise +/- 5°C oder weniger den Schweißvorgang beeinträchtigen können. Durch die erfindungsgemäße Lösung kann dabei ein sehr kompaktes Gerät zur Verfügung gestellt werden, da im hinteren Gehäuseabschnitt vorgegebene maximale Abmessungen eingehalten werden können. In diesem hinteren Gehäuseabschnitt kann die Bedienungsperson das Gerät bequem mit einer Hand erfassen.

Die Trennung in zwei separate Gehäuse (Extrudergehäuse und Heißluftgehäuse) im vorderen Abschnitt des Geräts hat den weiteren Vorteil, dass die dort untergebrachten Funktionseinheiten im Reparatur- oder Wartungsfall jeweils für sich rasch zugänglich sind, wodurch das Gerät sehr wartungsfreundlich ist.

Weiterhin ist vorteilhaft, dass bei getrennten Gehäusen die relative Lage der zur Vorwärmung dienenden Heißluftdüse zum Schweißschuh der Extrudereinheit beispielsweise durch Verschieben oder Austausch der Heißluftdüse verändert und somit den gewünschten Verhältnissen optimal angepasst werden kann.

Die thermische Trennung des Extrudergehäuses zur Antriebseinheit kann beispielsweise durch Verwendung geeigneter Werkstoffe wie Duroplast/Glasfaser-Kombinationen erfolgen.

Gemäß einer bevorzugten Weiterbildung der erfindungsgemäßen Aufgabenlösung ist ein äußerer Ringkanal in dem zylindrischen Gehäuseabschnitt vorgesehen, der in einen in dem Übergangsabschnitt angeordneten seitlich von diesem äußeren Ringkanal abzweigenden Luftkanal mündet, welcher dann wiederum mit dem zur Heißluftdüse führenden Kanal in der Heißlufteinheit strömungstechnisch in Verbindung steht. Auf diese Weise kann man die Luft beispielsweise zugeführt aus einer externen Druckluftquelle zunächst durch den weiter hinten liegenden Gehäuseabschnitt führen, welcher beispielsweise gleichzeitig den Motor und gegebenenfalls weitere Elemente des Antriebs für den Extruder aufnimmt und dann die Druckluft in dem Übergangsabschnitt seitlich herausführen, so dass diese dann anschließend weiter in dem separaten Gehäuse der Heißlufteinheit geführt wird.

Besonders vorteilhaft für Reparatur oder Wartung des Geräts ist eine bevorzugte Ausführungsvariante der Erfindung, nach der das Heißluftgehäuse und/oder das Extrudergehäuse jeweils unabhängig voneinander nach Lösen entsprechender Befestigungsmittel von dem Gerät abnehmbar sind. Hier war der Aufwand bei den aus dem Stand der Technik bekannten Geräten wesentlich höher, da im Reparaturfall der gesamte vordere Gehäusebereich demontiert werden musste.

Die Trennung des Gehäuses im vorderen Bereich des Geräts in zwei Teilgehäuse, nämlich Heißluftgehäuse und Extrudergehäuse kann man bevorzugt konstruktiv beispielsweise so lösen, dass der Übergangsabschnitt zwei miteinander verbindbare einander gegenüberliegende Flansche umfasst, wobei an einem der Flansche oder an beiden Flanschen zum vorderen Ende des Geräts hin gerichtet Extrudergehäuse und Heißluftgehäuse und an einem oder beiden Flanschen zum hinteren Ende des Geräts hin Motorgehäuse und hinterer Gehäuseabschnitt montierbar sind. Die Trennung vollzieht sich somit im Bereich des Übergangsabschnitts. Der hintere Abschnitt des Gehäuses, der das Motorgehäuse umfasst wird in der Regel von dem Extrudergehäuse zum vorderen Ende des Geräts hin in axialer Flucht fortgesetzt. Dieses ist in der Regel so, da die Extruderschnecke von der Motorwelle angetrieben wird. Das Heißluftgehäuse ist dagegen axial und seitlich versetzt zu dem hinteren Gehäuseabschnitt angeordnet. Die Heißluftdüse, die sich am vorderen Ende des Heißluftgehäuses befindet, liegt dann mit Abstand neben dem Schweißschuh, der sich am vorderen Ende des Extrudergehäuses befindet.

Die Bestimmung der jeweiligen Ist-Temperatur der Heißluft ist für einen ordnungsgemäßen Prozessablauf wichtig. Dazu kann man ein Thermoelement verwenden. Die erfindungsgemäße Trennung der beiden Gehäuse bietet die Möglichkeit, dass in dem Heißluftgehäuse wenigstens ein vorzugsweise zentrisch in Achsrichtung ausgerichtetes Thermoelement für die Bestimmung der Temperatur der Heißluft angeordnet ist. Es besteht demnach ausreichend Platz für ein solches Thermoelement, welches aufgrund der Gehäusetrennung durch die Heizpatrone für den Extruder nicht beeinflusst wird.

Durch die Gehäusetrennung steht auch mehr Platz für die Heizpatrone zur Erwärmung des Extrudats zur Verfügung. Vorzugsweise ist diese Heizpatrone in dem Extrudergehäuse so angeordnet, dass sie die Extruderschnecke koaxial umgibt und nach außen hin den Innendurchmesser des Extrudergehäuses weitgehend ausfüllt. Der innere Querschnitt des Extrudergehäuses steht somit allein für die Extruderschnecke und diese Heizpatrone zur Verfügung. Das Extrudergehäuse kann folglich kleiner dimensioniert werden.

Die Trennung der beiden Gehäuse hat einen weiteren Effekt. Es ist dadurch möglich, das Gerät so zu konstruieren, dass nur der Innenraum des Heißluftgehäuses und derjenige des hinteren Gehäuseabschnitts von der zugeführten Luft mit Druck beaufschlagt sind. In dem Extrudergehäuse befindet sich keine Druckluft, da diese vorher in dem Übergangsabschnitt abgezweigt wird und von dort aus in das separate Heißluftgehäuse strömt.

Für die Überwachung der Temperatur des Extrudats ist bevorzugt ebenfalls ein Thermoelement vorgesehen. Hier kann man beispielsweise in dem Extrudergehäuse zwischen Extruderschnecke und Düse wenigstens ein ringförmig ausgebildetes Thermoelement für die Bestimmung der Temperatur des Extrudats anordnen. Dies ermöglicht eine besonders kompakte Bauweise in diesem Bereich. Durch die Heißluft kann dieses Thermoelement wegen der Trennung der Gehäuse in keinem Fall beeinflusst werden.

Die in den Unteransprüchen beschriebenen Merkmale betreffen bevorzugte Weiterbildungen der erfindungsgemäßen Aufgabenlösung. Weitere Vorteile der vorliegenden Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher erläutert. Dabei zeigen:
Figur 1 eine perspektivische Ansicht eines Handschweißextruders gemäß einer möglichen Ausführungsvariante der vorliegenden Erfindung mit der Heftdüse in der Arbeitsposition ;
Figur 2 eine vergrößerte Seitenansicht des vorderen Bereichs eines Handschweißextruders gemäß einer alternativen Ausführungsvariante der Erfindung mit aufsteckbarer Heftdüse;
Figur 3 eine vergrößerte Detailansicht des vorderen Bereichs des Handschweißextruders von Figur 1 mit der Heftdüse in der Ruheposition;
Figur 4 eine Teilansicht des vorderen Bereichs des Handschweißextruders von Figur 3 mit der Heftdüse in Arbeitsposition in perspektivischer Darstellung;
Figur 5 eine Ansicht des vorderen Bereichs des Handschweißextruders von Figur 1 mit der Heftdüse in der Arbeitsposition im Längsschnitt.

Zunächst wird auf die Figur 1 Bezug genommen, die eine perspektivische Ansicht eines Handschweißextruders gemäß einer möglichen Ausführungsvariante der vorliegenden Erfindung zeigt. Das Gehäuse des Handschweißextruders umfasst einen vorderen Bereich mit zwei voneinander getrennten Gehäusen, nämlich dem Extrudergehäuse 10 und dem Heißluftgehäuse 11, einen Übergangsabschnitt 12, einen in Achsrichtung dahinter liegenden gemeinsamen etwa zylindrischen Gehäuseabschnitt 13 und einen endseitigen im Durchmesser etwas größeren Gehäuseabschnitt 14. Der etwa zylindrische Gehäuseabschnitt 13 umfasst im wesentlichen das Motorgehäuse und das Getriebegehäuse für den Antrieb des Extruders. Dabei sind in dem Gehäuseabschnitt 13 der Motor und das Getriebe so untergebracht, dass sich um diese herum nach außen zum Gehäuse 13 hin ein Ringkanal für die durchströmende Druckluft ergibt. Die Druckluft tritt beispielsweise von einer externen Druckluftquelle kommend endeitig über einen an eine Tülle 36 angeschlossenen Druckluftschlauch (nicht dargestellt) in das Gehäuseinnere des endseitigen Gehäuseabschnitts 14 ein und gelangt von dort aus in den Ringkanal. Da die Druckluft den Motor umspült hat dies gleichzeitig den Effekt, dass der Motor gekühlt wird. Aus dem Ringkanal tritt die Druckluft dann in dem Übergangsabschnitt 12 in einen seitlich radial nach außen führenden Abzweigkanal ein und gelangt von dort aus in das Innere des Heißluftgehäuses 11. Dort ist ein wendelförmiges Heizelement angeordnet, welches die weiter in axialer Richtung durch das Heißluftgehäuse 11 strömende Druckluft erwärmt, bis sie zur Heißluftdüse 23 gelangt, an deren vorderem Ende die heiße Druckluft austritt. In dem Heißluftgehäuse 11 erstreckt sich weiterhin etwa in Achsmitte in axialer Richtung ein Thermoelement zur Bestimmung der Temperatur der Heißluft, wobei dieses Thermoelement nach vorn hin das Heizelement überragt.

In axialer Verlängerung zum etwa zylindrischen gemeinsamen Gehäuseabschnitt 13, in dem sich Motor und Getriebe befinden, schließt sich vor dem Übergangsabschnitt 12 das Extrudergehäuse 10 an, dessen Achse mit dem Gehäuseabschnitt 13 fluchtet, was den Vorteil hat, dass die Abtriebswelle des Getriebes unmittelbar die Extruderschnecke antreiben kann. Die Extruderschnecke umfasst in an sich bekannter Weise einen hinteren Abschnitt mit scharfkantiger Profilierung, in dessen Bereich der eingezogene Kunststoffdraht zerkleinert und granuliert wird, an den sich dann nach vorn hin die eigentliche spiralförmige Extruderschnecke anschließt. Diese Extruderschnecke umgibt koaxial eine Heizpatrone mit Heizwendel, so dass das Extrudat aufgeschmolzen, zum vorderen Ende des Extrudergehäuses 10 (in der Zeichnung nach links) gefördert, durch die Extruderdüse gepresst und dem Schweißschuh 29 zugeführt wird, wo das Extrudat austritt. Für die abnehmbare Befestigung des Schweißschuhs 29 am Extrudergehäuse 10 dient beispielsweise eine Schelle 30, so dass eine einfache Demontage des Schweißschuhs 29 möglich ist

Im Bereich des Übergangsabschnitts 12 kann sich ein hier nicht dargestellter Einzugskanal für den in das Extrudergehäuse einzuziehenden Kunststoffdraht befinden. In dem Übergangsabschnitt 12 befindet sich ein radial seitlich nach außen führender Abzweigkanal für die Druckluft, der in das Heißluftgehäuse 11 führt und strömungstechnisch in Verbindung steht mit einem Ringkanal in dem zylindrischen Gehäuseabschnitt. Das Heißluftgehäuse 11 nimmt ein Heizelement auf, welches in der äußeren Ansicht gemäß Figur 1 nicht zu sehen ist. In Figur 1 sind weiterhin zwei Flansche 39, 40 in dem Übergangsabschnitt 12 erkennbar, nämlich ein vorderer Flansch 39 und ein hinterer Flansch 40, die miteinander verbindbar sind und einander gegenüberliegen, wobei an dem einen Flansch 39 zum vorderen Ende des Geräts hin gerichtet das Heißluftgehäuse 11 befestigbar ist (siehe auch Figur 1) und an den beiden Flanschen 39, 40 zum hinteren Ende des Geräts hin auch Motorgehäuse und hinterer Gehäuseabschnitt montierbar sind. Das eigentliche Extrudergehäuse 10 wird etwas weiter vorn montiert, da zwischen diesem und dem Flansch 39 noch ein Gehäuseabschnitt 41 liegt, der unter anderem ein Rillenkugellager aufnimmt.

Der endseitige Gehäuseabschnitt 14 des Handschweißextruders umfasst eine äußere Kappe 34, die bevorzugt aus Gummi besteht und außen profiliert ist, wie man aus Figur 1 erkennen kann. Dies hat den Sinn, diesen hinteren Gehäusebereich etwas nachgiebig und griffiger zu machen, um beim Ablegen des Geräts zu vermeiden, dass dieses wegrollen kann. Da das abgelegte Gerät auf dem hinteren Gehäuseabschnitt 14 aufliegt, wäre es ungünstig, diesen rein zylindrisch und glatt auszubilden. Wie man weiterhin erkennt, hat der hintere Gehäuseabschnitt 14 einen etwas größeren äußeren Durchmesser als der beim Arbeiten mit dem Gerät als Handgriff dienende zylindrische Abschnitt 13. Dies hat den Hintergrund, dass eine größere Anzahl von Kabeln von der Rückseite her in das Gerät eingeführt werden und die Verteilung dieser Kabel in einem erweiterten Innenraum des Gehäuseabschnitts 14 erfolgt. Am rückseitigen Ende des Geräts befindet sich eine drehbare Tülle 36, auf der der Schlauch (nicht dargestellt) für die Luftversorgung des Geräts befestigt wird. Durch diesen Schlauch gehen auch gleichzeitig die Kabel für die elektrische Versorgung und die Steuerung der verschiedenen Funktionen des Geräts. Diese Kabel werden dann durch einen Kanal in den Innenraum des Gehäuseabschnitts 14 eingeführt, wo dann die Verteilung erfolgt.

In dem Innenraum ist auch ein wichtiges Bauteil für die Sicherheit des Geräts untergebracht, nämlich ein Sensor (nicht dargestellt), dessen Aufgabe es ist, festzustellen, wenn beispielsweise durch äußere Einflüsse die Luftversorgung des Geräts unterbrochen wird, beispielsweise wenn der Druckluftschlauch abgeklemmt wird oder dergleichen. In diesem Fall schaltet der Sensor sofort das Heizelement für die Erwärmung der Druckluft aus, da es andernfalls zu einer gefährlichen Überhitzung im Heißluftgehäuse käme. Auch deshalb wird ein größerer Bauraum im Inneren des hinteren Gehäuseabschnitts 14 benötigt. Dieser Gehäuseabschnitt 14 geht dann zum vorderen Ende des Geräts hin in einem konischen Abschnitt 38 in den zylindrischen Gehäuseabschnitt 13 über.

Am vorderen Ende des Extrudergehäuses 10 befindet sich der Schweißschuh 29. Das von der im Extrudergehäuse 10 aufgenommenen Extruderschnecke geförderte Extrudat gelangt in eine Extruderdüse und tritt aus dieser aus in einen Kanal im Inneren des Schweißschuhs 29. Beim Schweißen wird so vorgegangen, dass die Heißluftdüse 23 zur Vorwärmung der zu verschweißenden Kunststoffabschnitte mittels der austretenden Heißluft in Schweißrichtung immer vor dem Schweißschuh 29 angeordnet ist. Da das Extrudat in axialer Richtung durch das Extrudergehäuse 10 gepresst wird, ist zur Aufnahme der dabei in Gegenrichtung auftretenden Kräfte zwischen Extruderschnecke und Getriebe auf der Abtriebswelle ein Axialrillenkugellager angeordnet, welches in dem Gehäuseabschnitt 41 untergebracht sein kann.

Wir man nun weiterhin aus Figur 1 erkennen kann, ist an der Heißlufteinheit 11 im Bereich der Heißluftdüse 23 eine Heftdüse 15 angebracht, die um eine Achse 16 schwenkbar an der Heißluftdüse befestigt ist, wobei diese Achse 16 quer zur Achse der zylindrischen Heißluftdüse 23 verläuft. In Figur 1 befindet sich die Heftdüse 15 in der Arbeitsposition, in der man Werkstücke unter Erwärmung heften kann. In dieser Position befindet sich die Heftdüse 15 vor dem Schweißschuh 29, so dass dieser das Arbeiten mit der Heftdüse 15 nicht beeinträchtigt. Durch die Heißluft, die am vorderen Ende der Heißluftdüse 23 austritt, wird die Heftdüse 15 erwärmt.

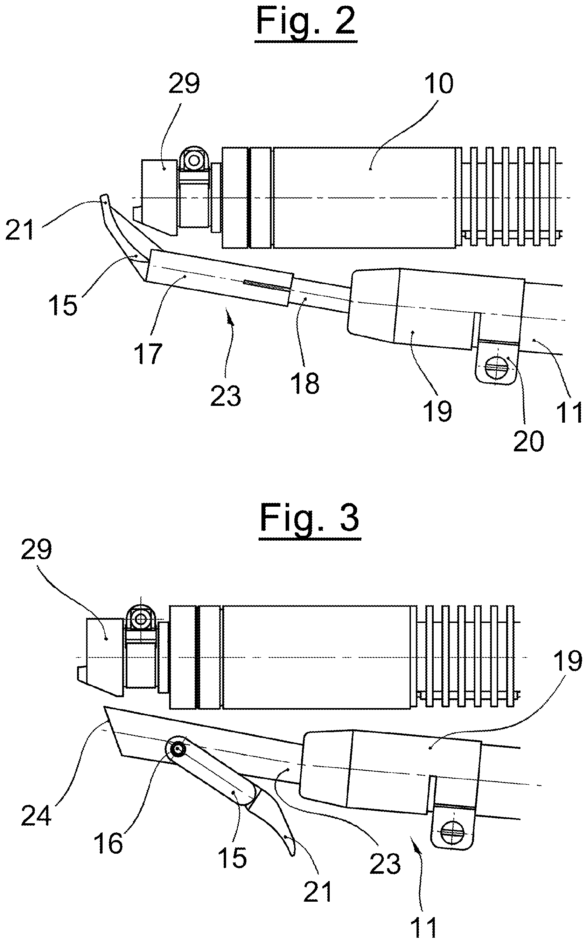

Eine alternative Bauvariante zeigt die Figur 2. In diesem Fall kann eine Baueinheit mit einer Heftdüse 15, welche einen Stutzen 17 aufweist, auf das Rohr 18 der Heißluftdüse aufgesteckt werden. Durch einfaches Abziehen kann die Heftdüse wieder entfernt werden, so dass man dann ganz normal mit dem Gerät schweißen kann und die Heißluftdüse zur Vorwärmung zur Verfügung steht. Wie man weiterhin in Figur 2 erkennt, kann auch das Rohr 18 der Heißluftdüse an seinem hinteren Ende mit einem im Durchmesser größeren Stutzen 19 verbunden sein, der beispielsweise mittels einer Klemmvorrichtung 20 oder Schelle an der Heißluftgehäuse 11 lösbar befestigbar sein kann.

Nachfolgend wird unter Bezugnahme auf die Figuren 3 bis 5 die Variante mit schwenkbarer Heftdüse 15 gemäß Figur 1 näher erläutert. In Figur 3 ist die Heftdüse 15 um ihre Achse 16 in die Ruheposition geschwenkt. Die Heftspitze 21 der Heftdüse ist gegenüber der Position von Figur 1 um nahezu 180° nach hinten geschwenkt. Somit liegt das vordere Ende der Heftdüse mit der Heftspitze 21 in einem Bereich unterhalb der Heißlufteinheit 11 und in einiger Entfernung zum Austrittsende 24 der Heißluftdüse. Dieses Austrittsende 24 liegt damit frei und das heiße Gas kann dort aus der Heißluftdüse austreten und die zu verschweißenden Werkstücke beim Extrudatschweißen vorwärmen. Hingegen liegt in der Arbeitsposition gemäß Figur 1 die Heftspitze 21 vor dem Schweißschuh, so dass dann mit dem Gerät geheftet werden kann.

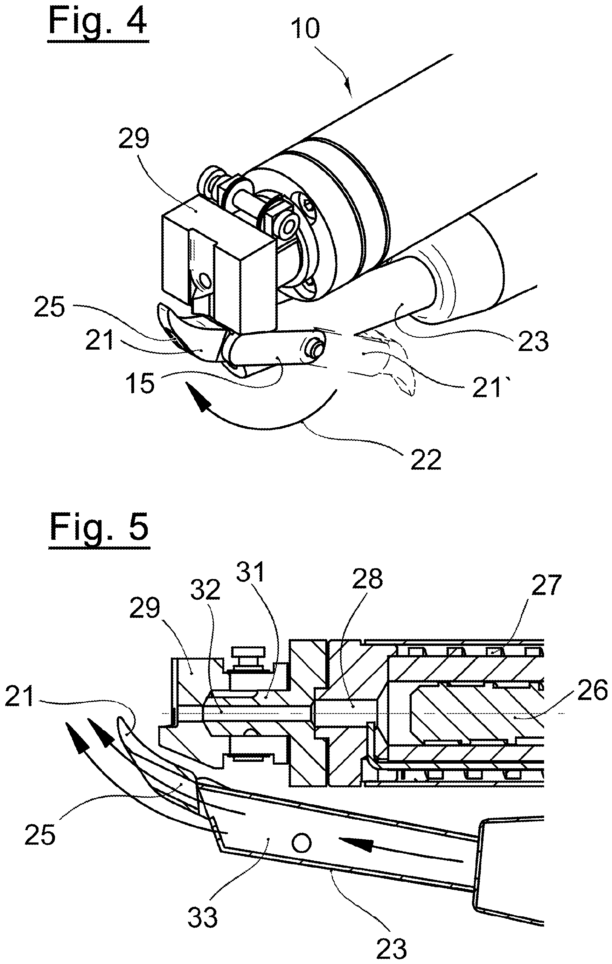

In Figur 3 ist der vordere Bereich des erfindungsgemäßen Handschweißextruders noch einmal perspektivisch dargestellt und die Schwenkbewegung der Heftdüse 15 um ihre Achse ist durch den Pfeil 22 angedeutet, wobei die Heftdüse in ihrer Ruheposition auch noch einmal in gestrichelten Linien angedeutet ist. Man kann in Figur 4 etwas besser die Lage der Heftdüse in Arbeitsposition relativ zum Schweißschuh 29 erkennen. Dieser kann in an sich bekannter Weise die unterschiedlichsten Formen haben, je nachdem welche Schweißnaht herzustellen ist und der Schweißschuh 29 wird entsprechend bei Bedarf gegen ein anders geformtes Exemplar ausgetauscht. Andeutungsweise kann man in Figur 4 auch die Öffnung des Luftkanals 25 erkennen, der sich in der Heftdüse befindet und durch den Heißluft austreten kann, wenn geheftet wird. Nähere Einzelheiten betreffend die Heftdüse 15 ergeben sich aus der Schnittdarstellung gemäß Figur 5, auf die nachfolgend Bezug genommen wird.

Man erkennt dort den vorderen Bereich der Extrudereinheit 10 im Schnitt mit einem Abschnitt der Extruderschnecke 26, die ein ringförmiges Heizelement (Heizwendel) 27 umgibt. In Extrusionsrichtung schließt sich dann ein Schmelzekanal 28 an, über den die Schmelze von der Extruderschnecke 26 unter Druck in einen Kanal des Düsenrohrabschnitts 31 eintritt. Auf diesem Düsenrohrabschnitt 31 ist der Schweißschuh 29 befestigt. Der Schmelzekanal 32 setzt sich in dem Schweißschuh 29 fort, so dass die Schmelze an dessen vorderen Ende austreten kann.

Die Heißluftdüse 23 ist in Figur 5 ebenfalls im Schnitt dargestellt. Die Heißluft gelangt durch den Hohlraum 33 der rohrförmigen Heißluftdüse in Pfeilrichtung zum vorderen Austrittsende 24 der Heißluftdüse und tritt teilweise dort direkt aus. Teilweise gelangt die Heißluft aber auch in einen Luftkanal 25 im Inneren der Heftdüse 15 und tritt durch eine Öffnung am vorderen Ende dieses Luftkanals aus, so dass sie bei Benutzung der Heftdüse unmittelbar durch diesen Luftkanal auf die zu heftenden Werkstücke gelangt und diese erwärmt.

Aus den Figuren 4 und 5 erkennt man auch gut die Form der Heftdüse 15. Die Heftdüse 15 ist an ihrem vorderen Ende zu einer Heftspitze 21 geformt und der Luftkanal 25, der sich durch die Heftdüse 15 hindurch erstreckt, endet in Nähe der Heftspitze 21 und in der Arbeitsposition gemäß Figuren 4 und 5 unterhalb der Heftspitze. Man sieht in Figur 5, dass im Bereich der Heftspitze 21 die Materialstärke der Wandung erhöht ist, so dass sich ein ausreichend stabiles Drucklager ergibt. Außerdem ist an der Spitze der Heftdüse eine leicht gekrümmte Fläche ausgebildet (siehe Figur 4), die die Druckfläche bildet, die auf den zu fixierenden Gegenstand gedrückt wird, so dass man in einer leichten Schwenkbewegung oder Abrollbewegung mit dieser Druckfläche der Heftspitze den zu fixierenden Gegenstand andrücken kann bzw. einen ersten Gegenstand gegen einen zweiten Gegenstand Drücken kann, um diese gegenseitig zu fixieren, was dem Heftvorgang entspricht. Durch die aus dem Luftkanal 25 austretende Heißluft erwärmt sich die Heftspitze und kann den zu heftenden Bereich plastifizieren.

### Bezugszeichenliste

- 10: Extrudergehäuse
- 11: Heißluftgehäuse
- 12: Übergangsabschnitt
- 13: zylindrischer Gehäuseabschnitt
- 14: endseitiger Gehäuseabschnitt
- 15: Heftdüse
- 16: Schwenkachse
- 17: Stutzen
- 18: Rohr
- 19: Stutzen
- 20: Klemmvorrichtung
- 21: Heftspitze
- 22: Pfeil
- 23: Heißluftdüse
- 24: Austrittsende
- 25: Luftkanal
- 26: Extruderschnecke
- 27: ringförmiges Heizelement
- 28: Schmelzekanal
- 29: Schweißschuh
- 30: Schelle
- 31: Düsenrohrabschnitt
- 32: Schmelzekanal
- 33: Hohlraum
- 34: Kappe
- 36: Tülle
- 38: konischer Abschnitt
- 39: Flansch
- 40: Flansch
- 41: Gehäuseabschnitt

## Patentansprüche

1. Handschweißextruder umfassend eine Extrudereinheit mit Extruderschnecke, eine Antriebseinheit mit Motor und Getriebe für den Antrieb der Extruderschnecke, eine Heißlufteinheit mit Heißluftdüse, ein äußeres Gehäuse sowie wenigstens einen Handgriff oder eine Griffvorrichtung, um den Handschweißextruder mit einer Hand oder mit beiden Händen zu halten, wobei Heißlufteinheit mit Heißluftdüse (23) einerseits und Extrudereinheit (10) mit Extruderschnecke (26) andererseits in einem vorderen Geräteabschnitt jeweils in voneinander getrennten Gehäusen, nämlich Exgtrudergehäuse (10) bzw. Heißluftgehäuse (11) untergebracht sind, deren jeweilige Gehäuseachsen zueinander parallel oder in einem flachen Winkel verlaufen, wobei Extrudergehäuse (10) und Heißluftgehäuse (11) des vorderen Gehäuseabschnitts über einen Übergangsabschnitt (12) miteinander verbunden sind und in einen gemeinsamen in Achsrichtung dahinter liegenden etwa zylindrischen Gehäuseabschnitt (13) münden, der den Haltegriff für die Einhandbedienung umfasst und wobei sich am vorderen Ende des Extrudergehäuses (10) ein Schweißschuh (29) befindet,
**dadurch gekennzeichnet, dass** an dem Handschweißextruder im Bereich der Heißlufteinheit (11) für die Vorwärmung beim Extrudatschweißen eine Heftdüse (15) schwenkbar angebracht ist, wobei die Heftdüse (15) an einem Rohrabschnitt der Heißluftdüse (23) aus einer Arbeitsposition in eine Ruheposition schwenkbar angebracht ist und wobei die Spitze (21) der Heftdüse (15) in der Arbeitsposition vor den vorderen Austrittsbereich des Schweißschuhs (29) ragt.

2. Handschweißextruder nach Anspruch 1, **dadurch gekennzeichnet, dass** eine Baueinheit mit einer am einen Ende angebrachten Heftdüse (15) und mindestens einem am anderen Ende vorgesehenen Stutzen (17, 19) auf einen etwa zylindrischen Abschnitt des Heißluftgehäuses (11) aufsetzbar, aufschiebbar oder in diesen hinein schiebbar und mit dem Heißluftgehäuse verbindbar ist, wobei bei am Handschweißextruder angebrachter Baueinheit die Heftdüse (15) in Nähe des Schweißschuhs (29) endet.

3. Handschweißextruder nach einem der Ansprüche 1 oder 2, **dadurch gekennzeichnet, dass** die Heftdüse (15) an einem Rohrabschnitt der Heißluftdüse (23) um eine quer zur Achse der Heißluftdüse verlaufende Achse (16) schwenkbar angebracht ist, derart, dass bei in die Ruheposition geschwenkter Heftdüse das vordere Ende (24) der Heißluftdüse freiliegt.

4. Handschweißextruder nach einem der Ansprüche 1 bis 3, **dadurch gekennzeichnet, dass** die Heftdüse (15) einen inneren Luftkanal (25) aufweist, der bei in die Arbeitsposition geschwenkter Heftdüse vor dem vorderen Ende der Heißluftdüse (23) endet und etwa mit diesem vorderen Ende der Heißluftdüse fluchtet.

5. Handschweißextruder nach einem der Ansprüche 1 bis 4, **dadurch gekennzeichnet, dass** bei in die Arbeitsposition geschwenkter Heftdüse (15) Heißluft aus der Heißluftdüse (23) unmittelbar und durch den Luftkanal (25) der Heftdüse hindurch in Richtung der zu verschweißenden Werkstücke austritt.

6. Handschweißextruder nach einem der Ansprüche 1 bis 5, **dadurch gekennzeichnet, dass** eine lösbar am Heißluftgehäuse (11) des Handschweißextruders anbringbare Baueinheit umfasst:
einen am Heißluftgehäuse anbringbaren Stutzen (19),
eine Heißluftdüse (23) in axialer Verlängerung zu dem Stutzen,
eine an der Heißluftdüse schwenkbar anbringbare Heftdüse (15)
oder eine an der Heißluftdüse aufsteckbar anbringbare Heftdüse.

7. Handschweißextruder nach einem der Ansprüche 1-6, **dadurch gekennzeichnet, dass** ein äußerer Ringkanal in dem zylindrischen Gehäuseabschnitt (13) vorgesehen ist, der in einen in dem Übergangsabschnitt (12) angeordneten seitlich von diesem äußeren Ringkanal abzweigenden Luftkanal mündet, welcher dann wiederum mit dem zur Heißluftdüse (23) führenden Kanal in der Heißlufteinheit strömungstechnisch in Verbindung steht.

8. Handschweißextruder nach einem der Ansprüche 1-7, **dadurch gekennzeichnet, dass** das Heißluftgehäuse (11) und/oder das Extrudergehäuse (10) jeweils unabhängig voneinander nach Lösen entsprechender Befestigungsmittel von dem Gerät abnehmbar sind.

9. Handschweißextruder nach einem der Ansprüche 1-8, **dadurch gekennzeichnet, dass** der Übergangsabschnitt (12) zwei miteinander verbindbare einander gegenüberliegende Flansche (39, 40) umfasst, wobei an dem einen Flansch (39) oder an beiden Flanschen zum vorderen Ende des Geräts hin gerichtet Extrudergehäuse (10) und/oder Heißluftgehäuse (11) und an einem oder beiden Flanschen zum hinteren Ende des Geräts hin Motorgehäuse und zylindrischer Gehäuseabschnitt (13) montierbar sind.

10. Handschweißextruder nach einem der Ansprüche 1-9, **dadurch gekennzeichnet, dass** der Innenraum des Heißluftgehäuses (11) und derjenige des zylindrischen Gehäuseabschnitts (13) und nicht der Innenraum des Extrudergehäuses (10) von der zugeführten Luft mit Druck beaufschlagt sind.

## Claims

1. A hand-held welding extruder comprising an extruder unit with an extruder screw, a drive unit with a motor and gear unit for the drive of the extruder screw, a hot-air unit with a hot-air nozzle, an outer housing and at least one handle or gripping device, so that the hand-held welding extruder can be held with one hand or with both hands, wherein the hot-air unit with the hot-air nozzle (23) on the one hand and the extruder unit (10) with the extruder screw (26) on the other hand are housed in a front device section in each case in housings separated from one another, i.e. an extruder housing (10) and a hot-air housing (11), the respective housing axes whereof run parallel or at a flat angle to one another, wherein the extruder housing (10) and the hot-air housing (11) of the front housing section are connected to one another by a transition section (12) and lead into a common approximately cylindrical housing section, which lies behind said transition section in the axial direction and which comprises the handle for the one-handed operation, and wherein a welding shoe (29) is located at the front end of the extruder housing (10),
**characterised in that** a tacking nozzle (15) is fitted in a swivelling manner to the hand-held welding extruder in the region of the hot-air unit (11) for the preheating during the extrudate welding, wherein the tacking nozzle (15) is fitted to a tubular section of the hot-air nozzle (23) and capable of being swivelled out of a working position into a rest position and wherein the tip (21) of the tacking nozzle (15) projects, in the working position, in front of the front exit region of the welding shoe (29).

2. The hand-held welding extruder according to claim 1,
**characterised in that** a component with a tacking nozzle (15) fitted at one end and at least one connecting piece (17, 19) provided at the other end can be mounted on, pushed on or pushed into an approximately cylindrical section of the hot-air housing (11) and can be connected to the hot-air housing, wherein the tacking nozzle (15) terminates in the vicinity of the welding shoe (29) when the component is fitted on the hand-held welding extruder.

3. The hand-held welding extruder according to any one of claims 1 or 2, **characterised in that** the tacking nozzle (15) is fitted to a tubular section of the hot-air nozzle (23) and capable of swivelling about an axis (16) running perpendicular to the axis of the hot-air nozzle, in such a way that the front end (24) of the hot-air nozzle lies open when the tacking nozzle is swivelled into the rest position.

4. The hand-held welding extruder according to any one of claims 1 to 3, **characterised in that** the tacking nozzle (15) comprises an inner air channel (25) which ends in front of the front end of the hot-air nozzle (23) when the tacking nozzle is swivelled into the working position and is aligned approximately with this front end of the hot-air nozzle.

5. The hand-held welding extruder according to any one of claims 1 to 4, **characterised in that**, when the tacking nozzle (15) is swivelled into the working position, hot air exits from the hot-air nozzle (23) directly and through the air channel (25) of the tacking nozzle in the direction of the workpieces to be welded.

6. The hand-held welding extruder according to any one of claims 1 to 5, **characterised in that** a component which can be fitted detachably to the hot-air housing (11) of the hand-held welding extruder comprises:
a connecting piece (19) which can be fitted to the hot-air housing, a hot-air nozzle (23) in the axial extension to the connecting piece, a tacking nozzle (15) which can be fitted in a swivelling manner to the hot-air nozzle or a tacking nozzle which can be fitted in a pluggable manner to the hot-air nozzle.

7. The hand-held welding extruder according to any one of claims 1-6, **characterised in that** an outer annular channel is provided in the cylindrical housing section (13), which channel leads into an air channel arranged in the transition section (12) and branches off laterally from this outer annular channel, which channel is then in turn connected in terms of flow to the channel in the hot-air unit leading to the hot-air nozzle (23).

8. The hand-held welding extruder according to any one of claims 1-7, **characterised in that** the hot-air housing (11) and/or the extruder housing (10) can each be removed from the device in each case independently of one another after the release of the corresponding fastening means.

9. The hand-held welding extruder according to any one of claims 1-8, **characterised in that** the transition section (12) comprises two flanges (39, 40) lying opposite one another and connectable to one another, wherein the extruder housing (10) and/or the hot-air housing (11) can be mounted on the one flange (39) or on both flanges directed towards the front end of the device and the motor housing and the cylindrical housing section (13) can be mounted on one or both flanges towards the rear end of the device.

10. The hand-held welding extruder according to any one of claims 1-9, **characterised in that** the interior of the hot-air housing (11) and that of the cylindrical housing section (13) are pressurised by the supplied air and the interior of the extruder housing (10) is not so pressurised.

## Revendications

1. Extrudeuse manuelle pour soudage, comprenant une unité d'extrusion comportant une vis d'extrusion, une unité motrice avec moteur et transmission pour l'entraînement de la vis d'extrusion, une unité d'air chaud avec buse à air chaud, un boîtier extérieur et au moins une poignée ou un dispositif de préhension pour tenir l'extrudeuse manuelle pour soudage d'une main ou des deux mains, l'unité d'air chaud avec la buse à air chaud (23) d'une part et l'unité d'extrusion (10) avec la vis d'extrusion (26) d'autre part étant logées dans une section avant de l'appareil respectivement dans des boîtiers séparés les uns des autres, à savoir un boîtier d'extrusion (10) ou un boîtier à air chaud (11) dont les axes de boîtiers respectifs sont orientés parallèlement ou en angle plat les uns par rapport aux autres, le boîtier d'extrusion (10) et le boîtier à air chaud (11) de la section avant du boîtier étant reliés entre eux par une section de transition (12) et débouchant dans une section de boîtier commune approximativement cylindrique (13) se trouvant derrière dans le sens de l'axe et qui entoure la poignée pour une manoeuvre par une main et un sabot de soudage (29) se trouvant à l'extrémité avant du boîtier d'extrusion (10),
**caractérisée en ce que**, au niveau de l'extrudeuse manuelle pour soudage, au niveau de l'unité d'air chaud, une buse de pointage (15) est installée de manière à pouvoir pivoter pour le préchauffage lors du soudage du produit extrudé (11), la buse de pointage (15) étant installée (23) de manière à pouvoir pivoter au niveau d'une section tubulaire de la buse à air chaud (23) d'une position de travail vers une position de repos et la pointe (21) de la buse de pointage (15) dépassant en position de travail de la zone de sortie avant du sabot de soudage (29).

2. Extrudeuse manuelle pour soudage selon la revendication 1, **caractérisée en ce qu'**une unité structurelle dotée d'une buse de pointage (15) installée à une extrémité et d'au moins une tubulure (17, 19) prévue à l'autre extrémité sur une section approximativement cylindrique du boîtier à air chaud (11) peut être posée, glissée ou poussée dans celle-ci et connectée au boîtier à air chaud, sachant que, si l'unité structurelle est installée au niveau de l'extrudeuse manuelle pour soudage, la buse de pointage (15) se termine à proximité du sabot de soudage (29).

3. Extrudeuse manuelle pour soudage selon une des revendications 1 ou 2, **caractérisée en ce que** la buse de pointage (15) est installée de manière à pouvoir pivoter autour d'un axe (16) orienté transversalement à l'axe de la buse à air chaud au niveau d'une section tubulaire de la buse à air chaud (23) de manière à ce que, dans le cas où la buse de pointage est pivotée dans la position de repos, l'extrémité avant (24) de la buse à air chaud soit libre.

4. Extrudeuse manuelle pour soudage selon une des revendications 1 à 3, **caractérisée** en ce la buse de pointage (15) présente un canal à air interne (25) qui dans le cas où la buse de pointage est pivotée en position de travail, se termine en amont de l'extrémité avant de la buse à air chaud (23) et est aligné approximativement avec cette extrémité avant de la buse à air chaud.

5. Extrudeuse manuelle pour soudage selon une des revendications 1 à 4, **caractérisée en ce que**, dans le cas où la buse de pointage (15) est pivotée dans la position de travail, de l'air chaud provenant de la buse à air chaud (23) sort directement et par le canal à air (25) de la buse de pointage en direction des pièces à souder.

6. Extrudeuse manuelle pour soudage selon une des revendications 1 à 5, **caractérisée en ce qu'**une unité structurelle pouvant être installée de manière dissociable au niveau du boîtier à air chaud (11) de l'extrudeuse manuelle de soudage comprend :
une tubulure pouvant être installée au niveau du boîtier à air chaud (19),
une buse à air chaud (23) dans le prolongement axial de la tubulure,
une buse de pointage (15) pouvant être installée de manière pivotable au niveau de la buse à air chaud ou une buse de pointage pouvant être installée en la fichant au niveau de la buse à air chaud.

7. Extrudeuse manuelle pour soudage selon une des revendications 1 à 6, **caractérisée en ce qu'**il est prévu dans la section de boîtier cylindrique un canal extérieur (13) qui débouche dans un canal à air disposé dans la section de transition (12) et bifurquant latéralement de ce canal annulaire extérieur et qui est ensuite à son tour en liaison technique d'écoulement avec le canal menant à la buse à air chaud (23) dans l'unité d'air chaud.

8. Extrudeuse manuelle pour soudage selon une des revendications 1 à 7, **caractérisée** en ce le boîtier à air chaud (11) et/ou le boîtier d'extrusion (10) peuvent être retirés respectivement indépendamment l'un de l'autre de l'appareil après avoir détaché les moyens de fixation correspondants.

9. Extrudeuse manuelle pour soudage selon une des revendications 1 à 8, **caractérisée en ce que** la section de transition (12) présente deux brides (39, 40) connectables entre elles et opposées, le boîtier d'extrusion (10) et/ou le boîtier à air chaud (11) pouvant être montés à une des brides (39) ou aux deux brides en direction de l'extrémité avant de l'appareil (10) et le carter du moteur et la section de boîtier cylindrique (13) en direction de l'arrière de l'appareil à une ou aux deux brides.

10. Extrudeuse manuelle pour soudage selon une des revendications 1 à 8, **caractérisée en ce que** l'intérieur du boîtier à air chaud (11) et celui de la section de boîtier cylindrique (13) et non pas l'intérieur du boîtier d'extrusion (10) sont sollicités par la pression de l'air apporté.
